# EUROPÄISCHE PATENTSCHRIFT

(11) **EP 2 347 897 B1**
(45) Veröffentlichungstag und Bekanntmachung des Hinweises auf die Patenterteilung: **01.05.2013**
(21) Anmeldenummer: 11153742.9
(22) Anmeldetag: 08.02.2011
(51) Int. Cl.: B32B 27/18, B32B 27/32, B65D 65/40, B65D 81/26, C08G 18/00, C09J 7/02, C23F 11/02

(54) **Verpackungsmaterial für korrosionsanfällige Gegenstände aus Metall**
Packaging material for metallic objects susceptible to corrosion
Matériau d'emballage pour objets en métal sujets à la corrosion

(43) Veröffentlichungstag der Anmeldung: 27.07.2011
(73) Patentinhaber: Mondi Gronau GmbH, 48599 Gronau (DE)
(72) Erfinder: Brüning, Wolfram, 53639 Königswinter (DE); Baldauf, Georg, 48366 Laer (DE)
(74) Vertreter: Albrecht, Rainer Harald

(56) Entgegenhaltungen:
- EP-A1- 2 184 162
- EP-A2- 0 825 019

## Beschreibung

Die Erfindung betrifft ein Verpackungsmaterial für korrosionsanfällige Gegenstände aus Metall, bestehend aus einer die Verpackungsaußenseite bildenden Polymerschicht, einer gasdurchlässigen Innenschicht an der Verpackungsinnenseite und mindestens einer zwischen der gasdurchlässigen Schicht und der äußeren Polymerschicht angeordneten Zwischenschicht, wobei die an die gasdurchlässige Schicht angrenzende Zwischenschicht einen flüchtigen Korrosionsinhibitor enthält und wobei die gasdurchlässige Innenschicht aus einem porösen Folienextrudat besteht. Die gasdurchlässige Schicht ermöglicht den Austausch von Substanzen in der Dampfphase durch Freiräume innerhalb der Schicht und meint nicht eine Permeation durch kompakte Polymerschichten.

Bei dem flüchtigen Korrosionsinhibitor, nachfolgend auch VCI (Volatile Corrosion Inhibitor) genannt, handelt es sich um Verbindungen, die neben korrosionsschützenden Eigenschaften auch einen Dampfdruck besitzen. Aufgrund der Verdampfungseigenschaften geht der Korrosionsinhibitor in die Gasphase über und setzt sich auf der Metallfläche des zu schützenden Gegenstandes als Film ab. Die Anziehung der VCI-Molekühle ist stärker als die von Wassermolekühlen, so dass sich auf der Metalloberfläche eine Schutzschicht bildet. Die Anwesenheit des in die Gasphase übergegangenen Korrosionsinhibitors hemmt die zur Korrosion führenden elektrochemischen Prozesse. Auf diese Weise wird innerhalb der Verpackung ein temporärer Korrosionsschutz herbeigeführt, dessen Wirkungsdauer über mehrere Monate anhält. Als flüchtiger Korrosionsinhibitor sind beispielsweise Nitrit-Verbindungen oder Aminsalze, z. B. Ethanolamoniumcaprylat bzw. -octanoat, Dicyclohexylamin-Benzoat und Diethanol-Amin-Nitrit einsetzbar (GB 1 048 770). Nach dem Entfernen der VCI-Verpackung entweichen die VCI-Komponenten rückstandsfrei von der Metalloberfläche, so dass keine Nachreinigung der Metallgegenstände vor ihrer weiteren Verwendung erforderlich ist. Das ist ein entscheidender Vorteil einer VCI-haltigen Verpackung gegenüber anderen Methoden des temporären Korrosionsschutzes wie z. B. der Beölung/Befettung von Bauteilen. Letztere erfordern in jedem Fall eine Entfernung des Korrosionsschutzöls/Fettes von den Teilen.

Ein Verpackungsmaterial mit den eingangs beschriebenen Merkmalen ist aus EP 2 184 162 A1 bekannt. Das Verpackungsmaterial besteht aus einer die Verpackungsaußenseite bildenden Kunststofffolie, einer innenseitigen Schicht und einer die Kunststofffolie mit der innenseitigen Schicht verbindenden Klebstoffschicht, die den flüchtigen Korrosionsinhibitor enthält. Die innenseitige Schicht, die im Vergleich zur Kunststofffolie an der Verpackungsaußenseite eine hohe Durchlässigkeit für den Korrosionsinhibitor aufweist, ist als textile Schicht ausgebildet und kann aus einem Vliesstoff aus Polymerfasern, einem Gewebe, Gewirke oder Gestricke bestehen. Das bekannte Verpackungsmaterial zeichnet sich durch eine gute Korrosionsschutzwirkung aus. Bisweilen wird jedoch bemängelt, dass beim Entfernen des Verpackungsmaterials auf den teilweise hochwertig bearbeiteten Flächen der metallischen Gegenstände Fusseln zurückbleiben. Hierbei handelt es sich um Faserstücke, die sich von der an den Gegenständen anliegenden textilen Innenschicht des Verpackungsmaterials lösen. Nachteilig ist ferner, dass das Laminat sich zum Verschließen der Verpackung nur schlecht schweißen bzw. siegeln lässt. Auch dies ist auf die textile Innenschicht zurückzuführen, die häufig aus Polypropylen-Fasern gefertigt ist, während für die Polymerschicht an der Verpackungsaußenseite Polyethylen verwendet wird. Es hat sich ferner gezeigt, dass die textile Innenschicht des Verpackungsmaterials an scharfkantigen Ecken des verpackten Gegentandes, z. B. verpackter Blechtafeln, beschädigt wird und das Laminat dabei einreißt.

Vor diesem Hintergrund liegt der Erfindung die Aufgabe zugrunde, ein Verpackungsmaterial für korrosionsanfällige Gegenstände aus Metall anzugeben, das sich rückstandsfrei von den verpackten Gegenständen ablösen lässt. Ferner soll die Gefahr, dass die Folie an scharfkantigen Ecken der verpackten Gegenstände einreißt oder beschädigt wird, geringer sein. Schließlich soll sich das Verpackungsmaterial durch gute Siegeleigenschaften auszeichnen.

Gegenstand der Erfindung und Lösung dieser Aufgabe ist ein Verpackungsmaterial nach Anspruch 1.

Die gasdurchlässige Schicht des Verpackungsmaterials besteht aus einem porösen Folienextrudat. Unter Folienextrudat wird eine aus einer Polymerschmelze gebildete flächige Bahn verstanden, die insbesondere eine Schichtdicke zwischen 5 µm und 100 µm aufweisen kann, wobei eine Schichtdicke zwischen 10 µm und 50 µm bevorzugt ist. Der Begriff "Folienextrudat" umfasst sowohl eine vorgefertigte Folie, die mit einer die Verpackungsaußenseite bildenden Folie verklebt wird, als auch eine durch Coextrusion gebildete Schicht einer mehrschichtigen Coextrusionsfolie. Die Porosität kann durch Öffnungen erzeugt werden, die mittels einer Lasertechnik oder Nadeltechnik eingebracht werden. Vorzugweise ist das Folienextrudat jedoch als atmungsaktive mikroporöse Schicht ausgebildet, wobei die Mirkoporosität auf Fehlstellen und Inhomogenitäten, kleine Poren und Risse in der Folie zurückzuführen sind. Das mikroporöse Folienextrudat weist eine Wasserdampfdurchlässigkeit von mehr als 1000 g/(m²d), vorzugsweise mehr als 4000 g/(m²d), gemessen nach DIN EN ISO 14268 bei 38° C auf.

Erfindungsgemäß weist das die gasdurchlässige Innenschicht bildende Folienextrudat eine Polymermatrix und darin eingelagerte Füllstoffe sowie eine durch Verstreckung erzeugte Mikroporösität auf. Die Polymerschmelze zur Herstellung der Innenschicht wird mit einem großen Anteil an Füllstoffen versehen und es wird eine heterogene Folie oder Kunststoffschicht erzeugt, die anschließend verstreckt wird. Dabei reißt die Polymermatrix an den Grenzflächen zu den Füllstoffpartikeln auf und es entstehen Kanäle sowie Poren, die einen Gasaustausch durch die Folie ermöglichen. Die Verstreckung kann uniaxial in Maschinenrichtung oder quer zur Maschinenrichtung oder auch biaxial ausgeführt werden.

Das Folienextrudat weist vorzugsweise eine Polymermatrix aus einem siegelfähigen Polyolefin, insbesondere einem Polyethylen, auf und kann anorganische Füllstoffe oder organische Füllstoffe enthalten. Als anorganische Füllstoffe kommen beispielsweise Kreide, Titandioxid, Kaolin, Quarzmehl, Kieselsäure und dergleichen in Betracht, wobei Kreide ein bevorzugter Füllstoff ist. Als organische Füllstoffe eignen sich Polymere, die mit der Polymermatrix keine innige Verbindung eingehen und nach einer Verstreckung der Folie bzw. Folienschicht an ihren Grenzflächen von der sie umgehenden Polymermatrix zumindest partiell abgelöst sind. In Betracht kommt beispielsweise Polystyrol. Die anorganischen und/oder organischen Füllstoffe werden dem Folienextrudat in einer Menge von 10 bis 80 Gew.-%, vorzugsweise 10 bis 60 Gew.-%, beigesetzt.

In Fällen, in denen das Verpackungsmaterial an glatten, hochwertig bearbeiteten Flächen der verpackten Gegenstände anliegt, kann es vorteilhaft sein, die Innenschicht mit einer Textur oder Mikrotextur auszustatten, die ein flächiges Haften des Verpackungsmaterials an der Oberfläche des verpackten Gegenstandes verhindert. Die Unebenheiten der Textur bzw. Mikrotextur erzeugen eine Zone an der Oberfläche des verpackten Gegenstandes, in der sich der Korrosionsinhibitor nach Übergang in die Gasphase ausbreiten kann.

Insofern hält eine mit einer Textur oder Mikrotextur versehene Folienoberfläche eine Mikroatmosphäre an der Oberfläche des verpackten Gegenstandes aufrecht, in der eine ausreichende Konzentration des Korrosionsinhibitors wirksam ist.

Die Textur kann beispielsweise durch Prägen erzeugt werden. Eine Mikrotextur lässt sich durch Verstrecken des Verpackungsmaterials über die Elastizitätsgrenze des Folienextrudats hinaus und eine elastische Rückbildung des verstreckten Verpackungsmaterials erzeugen. Sofern ein Verpackungsmaterial mit elastischen Eigenschaften und einer mit einer Mikrotextur versehenen Innenschicht gewünscht wird, kann entweder die Polymerschicht an der Verpackungsaußenseite oder eine Zwischenschicht aus einem thermoplastischen Elastomer bestehen.

Eine weitere Möglichkeit, um eine flächige Haftung des Verpackungsmaterials an glatten Oberflächen eines abgepackten Gegenstandes zu vermeiden, ist ein Folienextrudat mit einer Schaumstruktur, die durch Beimischen eines Treibmittels zur Polymerschmelze erzeugt worden ist. Zur Herstellung eines Folienextrudats mit Schaumstruktur wird die Polymerschmelze zur Erzeugung der Innenschicht mit einem Treibmittel versetzt, welches beim Aufschmelzen und Extrudieren des Polymers expandiert und Poren im Folienextrudat bildet. Es können physikalische Treibmittel, z. B. CO₂ eingesetzt werden. Geeignet sind ferner chemisch endotherme Treibmittel, die bei einer Temperatur zwischen 150° C und 250° C durch chemische Reaktion ein Gas bilden. Da ein endothermes Treibmittel bei seinen Zersetzungsreaktionen Energie verbraucht, hört die Gasentwicklung nach Beendigung der Wärmezufuhr auf. Die Gasentwicklung und damit auch die Porenbildung kann durch die Menge des Treibmittels, die Verteilung des Treibmittels in der Polymerschmelze sowie durch die Temperaturführung bei der Extrusion gesteuert werden.

Die Polymerschicht an der Verpackungsaußenseite besteht vorzugsweise aus einem Polymer, welches eine Barriere gegen eine Migration des Korrosionsinhibitors bildet. Ferner muss die Polymerschicht an der Verpackungsaußenseite ein Eindringen von Wasser verhindern und einen hohen Diffusionswiderstand auch für Wasser aufweisen. Die Polymerschicht an der Verpackungsaußenseite kann insbesondere aus einem Polyolefin oder einem polyolefinischen Copolymer, vorzugsweise aus einem Polyethylen bestehen. Insbesondere dann, wenn sowohl die Polymerschicht an der Verpackungsaußenseite als auch die Polymermatrix der gasdurchlässigen Innenschicht aus einem Polyethylen besteht, zeichnet sich das Verpackungsmaterial durch eine gute Verschweißbarkeit aus und kann durch thermisches Siegeln zu gasdicht geschlossenen Verpackungen weiterverarbeitet werden. Die Siegelfreudigkeit der Außenseite sollte höher sein als die der Innenschicht, was durch Verwendung verschiedener Polyethylentypen steuerbar ist.

Die Polymerschicht an der Verpackungsaußenseite weist zweckmäßig eine Dicke auf, die das zweifache bis zehnfache der Dicke der gasdurchlässigen Innenschicht beträgt.

Das erfindungsgemäße Verpackungsmaterial kann mit üblichen Kaschierverfahren als Laminat aus vorgefertigten Folien gefertigt werden. Eine sowohl in funktionsmäßiger Hinsicht als auch in fertigungstechnischer Hinsicht bevorzugte Ausgestaltung des erfindungsgemäßen Verpackungsmaterials sieht vor, dass die Zwischenschicht aus einer Klebstoffschicht besteht, welche das als mikroporöse Folie vorgefertigte Folienextrudat mit einer die Verpackungsaußenseite bildenden Kunststofffolie verbindet und den flüchtigen Korrosionsinhibitor enthält. Die Klebstoffschicht kann aus einem chemisch abbindenden Reaktionsklebstoff bestehen. Bevorzugt sind insbesondere chemisch abbindende Reationsklebstoffe, die bei niedrigen Temperaturen, insbesondere bei Raumtemperatur oder leicht erhöhter Temperatur aushärten und mit einer Temperatur bis 40° C verarbeitet werden. Der Korrosionsinhibitor kann kurz vor dem Kaschiervorgang in den Klebstoff eingemischt werden. Die Klebstoffschicht bildet einen Träger für den flüchtigen Korrosionsinhibitor. Um die Abgabe des Korrosionsinhibitors zu beschleunigen, kann es vorteilhaft sein, wenn die Oberfläche der Klebstoffschicht durch eine Vielzahl von Gasbläschen vergrößert ist. Als Reaktionsklebstoff ist ein Einkomponenten-Reaktionsharzklebstoff geeignet, der bei Zutritt von Luftfeuchtigkeit auspolymerisiert. Es kann insbesondere ein lösungsmittelfreier PUR-Klebstoff auf Basis aliphatischer oder aromatischer Isocyanate verwendet werden. Durch einen Wasserzusatz, der mit der VCI-Wirksubstanz der Klebstoffmasse zugeführt werden kann, kann die mit einer Gasbildung verbundene Reaktion und damit auch der Anteil, die Verteilung und die Größe der in der ausgehärteten Klebstoffschicht enthaltenen Gasbläschen beeinflusst werden. Zweckmäßig ist der Korrosionsinhibitor in einer Menge von 0,1 g/m² bis 5 g/m² bezogen auf die Fläche des Verpackungsmaterials in der Klebstoffschicht enthalten.

Die Kunststofffolie an der Verpackungsaußenseite des als Laminat gefertigten Verpackungsmaterials besteht aus einem Polymer, welches eine Barriere gegen eine Migration des Korrosionsinhibitors bildet. Zur Verringerung der VCl-Migration kann die Kunststofffolie an der Verpackungsaußenseite auch mehrschichtig ausgebildet sein und eine Sperrschicht mit einem hohen Diffusionswiderstand für den Korrosionsinhibitor aufweisen. Unabhängig davon, ob die Kunststofffolie ein- oder mehrschichtig ausgebildet ist, weist sie zweckmäßig eine Dicke zwischen 20 µm und 150 µm auf. Im Allgemeinen ist die Dicke der gasdichten Kunststofffolie an der Verpackungsaußenseite größer als die Dicke der gasdurchlässigen Innenschicht an der Verpackungsinnenseite.

Im Rahmen der Erfindung liegt es auch, dass das Verpackungsmaterial mit der die Verpackungsaußenseite bildenden Polymerschicht, zumindest einer Zwischenschicht, die einen flüchtigen Korrosionsinhibitor enthält, und der gasdurchlässigen Innenschicht als Coextrusionsfolie gefertigt ist.

### Ausführungsbeispiel

Es wurde eine dreischichtige Verbundfolie mit folgendem Schichtenaufbau hergestellt:
Verpackungsaußenseite: Polyethylen 90 µm
Zwischenschicht: Reaktives Klebersystem bestehend aus einem Zweikomponenten PUR-System mit einem Zusatz von 8 Gew.-% VCl; Auftragsmenge des Klebersystems 8 g/m²; Auftragsmenge VCI 0,64 g/m²
Verpackungsinnenseite: 20 µm dicke mikroporöse Folie aus Polyethylen mit 30 Gew.-% Kreide gefüllt und in CD-Richtung verstreckt; Wasserdampfdurchlässigkeit gemessen nach DIN EN ISO 14268 bei 38° C 8000 g/(m²d)

In einem Labortest wurde die Emissionswirkung des Korrosionsinhibitors untersucht. Die Korrosionsschutzwirkung entsprach einem zum Vergleich herangezogenen Laminat mit einer Nonwovenschicht an der Verpackungsinnenseite.

## Patentansprüche

1. Verpackungsmaterial für korrosionsanfällige Gegenstände aus Metall, bestehend aus einer die Verpackungsaußenseite bildenden Polymerschicht, einer gasdurchlässigen Innenschicht an der Verpackungsinnenseite und mindestens einer zwischen der gasdurchlässigen Schicht und der äußeren Polymerschicht angeordneten Zwischenschicht, wobei die an die gasdurchlässige Schicht angrenzende Zwischenschicht einen flüchtigen Korrosionsinhibitor enthält und wobei die gasdurchlässige Innenschicht aus einem porösen Folienextrudat besteht, **dadurch gekennzeichnet, dass** das die gasdurchlässige Innenschicht bildende Folienextrudat eine Polymermatrix und darin eingelagerte Füllstoffe sowie eine durch Verstreckung erzeugte Mikroporosität aufweist.

2. Verpackungsmaterial nach Anspruch 1, **dadurch gekennzeichnet, dass** das Folienextrudat eine Polymermatrix aus einem siegelfähigen Polyolefin, vorzugsweise einem Polyethylen, aufweist.

3. Verpackungsmaterial nach Anspruch 1 oder 2, **dadurch gekennzeichnet, dass** das Folienextrudat anorganische Füllstoffe enthält.

4. Verpackungsmaterial nach Anspruch 1 oder 2, **dadurch gekennzeichnet, dass** das Folienextrudat organische Füllstoffe enthält, die im Grenzflächenbereich zu der sie umgebenden Polymermatrix zumindest partiell abgelöst sind.

5. Verpackungsmaterial nach einem der Ansprüche 1 bis 4, **dadurch gekennzeichnet, dass** das Folienextrudat Füllstoffe in einer Menge von 10 bis 60 Gew.-% enthält.

6. Verpackungsmaterial nach einem der Ansprüche 1 bis 5, **dadurch gekennzeichnet, dass** das Folienextrudat eine Textur oder eine Mikrotextur aufweist, die ein flächiges Haften des Verpackungsmaterials an der Oberfläche des verpackten Gegenstandes verhindert.

7. Verpackungsmaterial nach einem der Ansprüche 1 bis 6, **dadurch gekennzeichnet, dass** das Folienextrudat eine Schaumstruktur aufweist, die durch Beimischen eines Treibmittels zur Polymerschmelze erzeugt worden ist.

8. Verpackungsmaterial nach einem der Ansprüche 1 bis 7, **dadurch gekennzeichnet, dass** die Polymerschicht an der Verpackungsaußenseite aus einem Polymer besteht, welches eine Barriere gegen eine Migration des Korrosionsinhibitors bildet.

9. Verpackungsmaterial nach einem der Ansprüche 1 bis 8, **dadurch gekennzeichnet, dass** die Polymerschicht an der Verpackungsaußenseite aus Polyolefin oder einem Polyolefin-Copolymer, vorzugsweise aus einem Polyethylen, besteht.

10. Verpackungsmaterial nach einem der Ansprüche 1 bis 9, **dadurch gekennzeichnet, dass** die Polymerschicht an der Verpackungsaußenseite eine Dicke aufweist, die das Zweifache bis Zehnfache der Dicke der gasdurchlässigen Innenschicht aufweist.

11. Verpackungsmaterial nach einem der Ansprüche 1 bis 10, **dadurch gekennzeichnet, dass** die Zwischenschicht aus einer Klebstoffschicht besteht, welche das als mikroporöse Folie vorgefertigte Folienextrudat mit einer die Verpackungsaußenseite bildenden Kunststofffolie verbindet und den flüchtigen Korrosionsinhibitor enthält.

12. Verpackungsmaterial nach Anspruch 11, **dadurch gekennzeichnet, dass** die Klebstoffschicht von einem chemisch abbindenden Reaktionsklebstoff gebildet ist.

13. Verpackungsmaterial nach Anspruch 11 oder 12, **dadurch gekennzeichnet, dass** die Oberfläche der Klebstoffschicht durch eine Vielzahl von Gasbläschen vergrößert ist.

14. Verpackungsmaterial nach einem der Ansprüche 11 bis 13, **dadurch gekennzeichnet, dass** der Korrosionsinhibitor in einer Menge von 0,1 g/m² bis 5 g/m² bezogen auf die Fläche des Verpackungsmaterials in der Klebstoffschicht enthalten ist.

15. Verpackungsmaterial nach einem der Ansprüche 11 bis 14, **dadurch gekennzeichnet, dass** die Kunststofffolie an der Verpackungsaußenseite mehrschichtig ausgebildet ist und eine Sperrschicht mit einem hohen Diffusionswiderstand für den Korrosionsinhibitor aufweist.

16. Verpackungsmaterial nach einem der Ansprüche 1 bis 10, **dadurch gekennzeichnet, dass** das Verpackungsmaterial mit der die Verpackungsaußenseite bildenden Polymerschicht, zumindest einer Zwischenschicht, die einen flüchtigen Korrosionsinhibitor enthält, und der gasdurchlässigen Innenschicht als Coextrusionsfolie gefertigt ist.

## Claims

1. A packaging material for corrosion-susceptible items from metal, consisting of a polymer layer forming the outside of the packaging, a gas-permeable inner layer on the inside of the packaging and at least one intermediate layer arranged between the gas-permeable layer and the outer polymer layer, wherein the intermediate layer adjacent to the gas-permeable layer includes a volatile corrosion inhibitor, and wherein the gas-permeable layer consists of a porous film extrudate, **characterised in that** the film extrudate forming the gas-permeable inner layer comprises a polymer matrix and fillers embedded therein as well as a micro porosity created by stretching.

2. The packaging material according to claim 1, **characterised in that** the film extrudate comprises a polymer matrix from a sealable polyolefin, preferably a polyethylene.

3. The packaging material according to claim 1 or 2, **characterised in that** the film extrudate includes inorganic fillers.

4. The packaging material according to claim 1 or 2, **characterised in that** the film extrudate includes organic fillers which are at least partially detached in the area adjacent to the surrounding polymer matrix.

5. The packaging material according to one of claims 1 to 4, **characterised in that** the film extrudate includes fillers in an amount of 10 to 60 percent by weight.

6. The packaging material according to one of claims 1 to 5, **characterised in that** the film extrudate comprises a texture or micro texture, which prevents the packaging material from flatly adhering to the surface of the packaged item.

7. The packaging material according to one of claims 1 to 6, **characterised in that** the film extrudate comprises a foam structure which has been produced by adding a raising agent to the polymer melt.

8. The packaging material according to one of claims 1 to 7, **characterised in that** the polymer layer, on the outside of the packaging, consists of a polymer which forms a barrier against migration of the corrosion inhibitor.

9. The packaging material according to one of claims 1 to 8, **characterised in that** the polymer layer, on the outside of the packaging, consists of a polyolefin or polyolefin copolymer, preferably a polyethylene.

10. The packaging material according to one of claims 1 to 9, **characterised in that** the polymer layer, on the outside of the packaging, comprises a thickness, which is between two times and ten times the thickness of the gas-permeable inner layer.

11. The packaging material according to one of claims 1 to 10, **characterised in that** the intermediate layer consists of an adhesive layer which connects the film extrudate pre-fabricated as a micro-porous film with a plastic film forming the outside of the packaging and which includes the volatile corrosion inhibitor.

12. The packaging material according to claim 11, **characterised in that** the adhesive layer is formed by a chemically setting reaction adhesive.

13. The packaging material according to claim 11 or 12, **characterised in that** the surface of the adhesive layer is enlarged by a plurality of gas bubbles.

14. The packaging material according to one of claims 11 to 13, **characterised in that** the corrosion inhibitor is contained in an amount of 0.1 g/m² to 5 g/m² relative to the area of the packaging material in the adhesive layer.

15. The packaging material according to one of claims 11 to 14, **characterised in that** the plastic film, on the outside of the packaging, is formed of several layers and comprises a barrier layer with a high diffusion resistance for the corrosion inhibitor.

16. The packaging material according to one of claims 1 to 10, **characterised in that** the packaging material is produced as a co-extrusion film with the polymer layer forming the outside of the packaging, at least one intermediate layer containing a volatile corrosion inhibitor and the gas-permeable inner layer.

## Revendications

1. Matière d'emballage pour des objets métalliques corrosifs, constituée d'une couche en polymère formant la face extérieure de l'emballage, d'une couche intérieure perméable au gaz sur la face intérieure de l'emballage et d'au moins une couche intermédiaire disposée entre la couche perméable au gaz et la couche extérieure en polymère, la couche intermédiaire adjacente à la couche perméable au gaz contenant un inhibiteur volatil de corrosion et la couche intérieure perméable au gaz étant constituée d'un film extrudé poreux, **caractérisée en ce que** le film extrudé poreux formant la couche intérieure perméable au gaz présente une matrice en polymère et des matières de charges stockées dans cette dernière et une microporosité créée par étirage.

2. Matière d'emballage selon la revendication 1, **caractérisée en ce que** le film extrudé présente une matrice en polymère en une polyoléfine scellable, de préférence en polyéthylène.

3. Matière d'emballage selon la revendication 1 ou la revendication 2, **caractérisée en ce que** le film extrudé contient des matières de charge anorganiques.

4. Matière d'emballage selon la revendication 1 ou la revendication 2, **caractérisée en ce que** le film extrudé contient des matières de charge organiques qui dans la zone superficielle limitrophe sont au moins partiellement détachées de la matrice en polymère environnante.

5. Matière d'emballage selon l'une quelconque des revendications 1 à 4, **caractérisée en ce que** le film extrudé contient des matières de remplissage dans une quantité de 10 à 60 % en poids.

6. Matière d'emballage selon l'une quelconque des revendications 1 à 5, **caractérisée en ce que** le film extrudé présente une texture ou une microtexture qui empêche une adhérence en nappe de la matière d'emballage sur la surface de l'objet emballé.

7. Matière d'emballage selon l'une quelconque des revendications 1 à 6, **caractérisée en ce que** le film extrudé présente une structure cellulaire, qui par addition d'un agent propulseur a été créée en masse fondue polymère.

8. Matière d'emballage selon l'une quelconque des revendications 1 à 7, **caractérisée en ce que** la couche en polymère sur la face extérieure de l'emballage est constituée d'un polymère qui forme une barrière contre une migration de l'inhibiteur de corrosion.

9. Matière d'emballage selon l'une quelconque des revendications 1 à 8, **caractérisée en ce que** la couche en polymère sur la face extérieure de l'emballage est constituée d'une polyoléfine ou d'un copolymère de polyoléfine, de préférence d'un polyéthylène.

10. Matière d'emballage selon l'une quelconque des revendications 1 à 9, **caractérisée en ce que** la couche en polymère sur la face extérieure de l'emballage présente une épaisseur qui correspond à du double au décuple de l'épaisseur de la couche intérieure perméable au gaz.

11. Matière d'emballage selon l'une quelconque des revendications 1 à 10, **caractérisée en ce que** la couche intermédiaire est constituée d'une couche d'agent adhésif qui relie le film extrudé préfabriqué en tant que film microporeux avec un film en matière plastique formant la face extérieure de l'emballage et qui contient l'inhibiteur volatil de corrosion.

12. Matière d'emballage selon la revendication 11, **caractérisée en ce que** la couche d'agent adhésif est formée par une colle réactive à prise chimique.

13. Matière d'emballage selon la revendication 11 ou la revendication 12, **caractérisée en ce que** la surface de la couche d'agent adhésif est agrandie par un grand nombre de bulles de gaz.

14. Matière d'emballage selon l'une quelconque des revendications 11 à 13, **caractérisée en ce que** l'inhibiteur de corrosion est contenu dans une quantité de 0,1 g/m² à 5 g/m² en rapport de la surface de la matière d'emballage dans la couche d'agent adhésif.

15. Matière d'emballage selon l'une quelconque des revendications 11 à 14, **caractérisée en ce que** le film en matière plastique sur la face extérieure de l'emballage est conçu en multicouches et présente une couche de barrage à haute résistance à la diffusion pour l'inhibiteur de corrosion.

16. Matière d'emballage selon l'une quelconque des revendications 1 à 10, **caractérisée en ce que** la matière d'emballage est fabriquée avec la couche en polymère formant la face extérieure de l'emballage, avec au moins une couche intermédiaire qui contient un inhibiteur volatil de corrosion et avec la couche intérieure perméable au gaz en tant que film coextrudé.
